# EUROPEAN PATENT APPLICATION

(11) **EP 4 501 607 A1**
(43) Date of publication of application: **05.02.2025**
(21) Application number: 23382810.2
(22) Date of filing: 03.08.2023
(51) Int. Cl.: B29C 70/44, B29D 24/00, B29C 43/36, B29L 31/30

(54) **METHOD FOR MANUFACTURING A FIBRE-REINFORCED COMPOSITE ARTICLE**

(71) Applicant: Barcelona Technical Center, SL, 08760 Martorell (ES)
(72) Inventor: RUIZ RINCÓN, Rafael, 08760 Martorell (ES); FERREIRO VARELA, Gonzalo, 08760 Martorell (ES); CABELLO CENTELLES, Sergio, 08760 Martorell (ES)
(74) Representative: Torner, Juncosa I Associats, SL

(57) **Abstract**

The present invention is related to a method for manufacturing a fibre-reinforced composite article (1) having at least one cavity (10), the method comprising the steps of:

providing two laminates or preforms (11,12) obtained by coating a fibre reinforcement with a resin, having at least one joining region (13) and at least one cavity defining region (14), placing the first laminate or preform (11) in a lower mould plate (21) of a mould (2), placing the second laminate or preform (12) in an upper mould plate (22) of a mould (2), placing a fluid impermeable element covering the at least one cavity defining region (14) of the two laminates or preforms, closing the lower mould plate (21) with the upper mould plate ( 22) so that the second laminate or preform is placed over the first laminate or preform, so that at least one cavity (10) is created between opposite cavity defining regions of the two laminates or preforms (11,12) and so that the joining regions (13) of the first and second laminates are in contact and overlapping one another, injecting a fluid to the at least one cavity (10) via at least one fluid injection port of the mould (2), curing the first and second laminate or preform (11, 12) to form a fibre reinforced composite article (1), removing the fluid from the at least one cavity (10) of the fibre-reinforced composite article (1), opening the mould (2), and demoulding the fibre-reinforced composite.

## Description

### Technical field

The present invention relates to a method for manufacturing a fibre-reinforced composite article having at least one cavity, a mould for manufacturing the article, a system for manufacturing the article and to the fibre-reinforced composite article obtainable by the method thereof.

### Background of the Invention

Currently, the two most widespread manufacturing process for the manufacture of fiber components are the Prepreg compression process and Resin Transfer Molding (RTM). Both processes combine the pressure of a mold and counter mold together with the temperature for the manufacture of components. The main difference between the two processes is that while in the pre-preg compression the resin or matrix is already pre-impregnated in the fabrics themselves, in the RTM process, the fabrics do not contain resin and the resin is injected into the mold once it is closed. Both processes provide a large production capacity and are often used to manufacture "single skin" components, that is, components with a single skin of certain thicknesses and made entirely of fibre-reinforced composite.

On the other hand, due to mechanical requirements, as in the case of fairings for the railway sector, there might be a need to manufacture "double skin" type components, that is, the same component with two separated skins or layers by a nucleus or core (sandwich type) or air (hollow). Those mechanical requirements are due to the need to obtain parts with a high inertia that do not involve an excessive increase in cost or weight.

Currently, both in the RTM process and in the pre-preg compression process, due to its manufacturing system where there is a mold and a counter mold that press against each other, the only type of "double skin" components that can be manufactured are those that include an internal core that allows the separation of both skins and supports the pressure exerted by the mold during the curing of the piece. The possibility of manufacturing "double skin" parts separated by air (hollow) is not feasible today using these processes, but there is a need for it, since currently they can only be manufactured using very manual processes and long cycle times as would be the case of pre-preg autoclave where each piece depends largely on the ability of each laminator.

The following documents exemplify the current state of the art in this sector: WO2020120896A1 discloses a curing mold for manufacturing a turbomachine part made of composite material from a preform produced by draping pre-impregnated materials, comprising: a first body and a second body designed to be attached to each other and jointly defining a fixed air gap for receiving the preform and itself comprising a molding part of complementary shape with the part to be manufactured and intended to receive a portion to be molded of the preform, and at least one additional part located in a peripheral space of the air gap and intended to receive an additional portion forming an edge of the preform; a heating element designed to heat the preform in the air gap to a first temperature; at least one inflatable bladder housed in the first or second body, facing an additional part of the air gap; a member for injecting a pressurized fluid inside the bladder(s), the or each of the bladders being in addition adapted to compress, in the inflated state, the additional portion of the preform, located in the additional portion of the air gap facing said bladder, so as to expel the thermosetting resin from the additional portion of the preform towards the molding portion of the preform and thus to put the preform under hydrostatic pressure.

WO2018196514A1 discloses a method for preparing a composite material gas intake passage and a composite material gas intake passage, wherein the preparation method comprises the following steps: a) laying at least one layer of a prepreg on a female mould to form a prepreg layer; b) placing a gasbag in the prepreg layer, and completing mould assembly; c) inflating the gasbag to a predetermined pressure, and pressing the prepreg layer between the outer surface of the gasbag and the inner surface of the female mould; d) subjecting the entire mould assembled in step c) to a curing treatment; and e) relieving the pressure in the gasbag and opening the mould to release the prepared composite material gas intake passage green body. KR101387394B1 relates to a method for manufacturing a composite hollow structure and a mold thereof, wherein the manufacturing method includes arranging a prepreg in a mold and arranging a tube inside the prepreg.

KR102312637B1 relates to a tubular high-speed molding method that comprises a first step of laminating a carbon fiber prepreg on a cavity of a lower mold and engaging a tubular mold and the lower mold; a second step of injecting a heating medium oil heated to a preset temperature to the upper part of the tubular mold at a preset pressure; a third step of forming the carbon fiber prepreg by expanding a flexible membrane; a fourth step of discharging the heating medium oil inside the tubular mold; and a fifth step of cooling the lower mold.

The railway sector is currently turning its attention to the replacement of components or parts, which to date were made of aluminum or other heavier materials, with fibre-reinforced composite parts whose advantage is reduced weight compared to equal or better mechanical properties. The heaviest and/or repetitive elements are in the spotlight and that is where the fairings come into play. The trains are covered by fairings and are heavy parts that are repeated in large numbers in all the train cars, so their replacement would present significant advantages.

Due to the different technical requirements and functions of the fairings, they cannot be replaced by "single skin" type fibre-reinforced composite components as they would not meet the desired and necessary requirements. For this reason, these types of parts are currently replaced by "double skin" or sandwich-type parts with a core that are currently manufactured using more manual and expensive methods.

The main problem with current sandwich-type parts (with core or nucleus) is that they have a high cost since they are manufactured with a highly manual manufacturing system and high cycle times (pre-preg autoclave) and the cost of the core or nucleus is high since this core has to meet various requirements, such as being fireproof, not absorbing resin, withstanding high temperatures and pressures during the fibre-reinforced composite curing process without (or minimal) deformations, being easy to machine and cut, etc., amounting to a whole series of requirements that make these materials very expensive and difficult to control during manufacturing processes. It is for these reasons that its use in mass manufacturing processes is not widespread.

Due to the real need of the sector and the difficulty of being able to mass-manufacture this type of parts, it is hereby proposed a manufacturing system that, combined with the pre-preg compression system and through the injection of a fluid or another system that allows to balance the internal pressures, allows to manufacture this type of parts with the great advantage of not having the need to use cores or nuclei, which apart from implying savings in costs, time cycles and the other aforementioned advantages, will allow to cover a real need in the railway sector in particular, but one that will surely have future applications in other sectors as relevant as the automotive sector.

### Description of the Invention

In order to address one or more of the foregoing problems, one aspect of the present invention relates to a method for manufacturing a fibre-reinforced composite article having at least one cavity, the method comprising the steps of: providing two laminates or preforms obtained by coating a fibre reinforcement with a resin, said at least two laminates or preforms having at least one joining region and at least one cavity defining region, placing the first laminate or preform in a lower mould plate of a mould as defined hereinbelow, placing the second laminate or preform in an upper mould plate of a mould as defined hereinbelow, placing a fluid impermeable element covering the at least one cavity defining region of the two laminates or preforms, closing the lower mould plate with the upper mould plate so that the second laminate or preform is placed over the first laminate or preform, so that at least one cavity is created between opposite cavity defining regions of the two laminates or preforms and so that the joining regions of the first and second laminates are in contact and overlapping one another, injecting a fluid to the at least one cavity defined between the first and the second laminate or preform via at least one fluid injection port of the mould, curing the first and second laminate or preform to form a fibre reinforced composite article having at least one cavity between a first and a second wall joined together at least in a peripheral joining region, removing the fluid from the at least one cavity of the fibre-reinforced composite article, opening the mould, and demoulding the fibre-reinforced composite.

The method herein further discloses that the step of curing the first and second preform may comprise the steps of: applying a pressure to the lower mould plate and/or to the upper mould plate; and heating the lower mould plate and/or the upper mould plate.

Moreover, the method herein further discloses that the first and second laminates or preforms may have two cavity defining regions, one peripheral joining region and one intermediate joining region between the two cavity defining regions and in connection with the peripheral joining region, so that when the lower mould plate is closed with the upper mould plate, two cavities are created between opposite cavity defining regions and the peripheral and intermediate joining regions of the first and second laminates or preforms are in contact and overlapping one another, so that curing the first and second laminates or preforms forms a fibre reinforced composite article having two cavities between a first and a second wall joined together in a peripheral joining region and in an intermediate joining region between both cavities.

The method herein disclosed may further comprise the step of placing at least one reinforcing element on the first preform, said reinforcing element being shaped so as to be in contact with the second preform when the mould is closed.

Furthermore, the step of curing the first and second preform in the method herein disclosed may further comprise the step of curing the at least one reinforcing element so that it joins to the first and second preforms.

Furthermore, the method herein disclosed may further comprise the step of cooling the fibre-reinforced composite article after curing and before opening the mould.

In a particular embodiment, in the present method the fluid injected in the at least one cavity may be compressed air.

The method herein disclosed may further comprise the step of placing at least one injector and removing said at least one injector.

Moreover, the fluid impermeable element in the method disclosed herein may be composed of a polymer comprising a resin of polyester, vinyl-ester, epoxide and/or combinations thereof. The fluid impermeable element disclosed in the present method may preferably be a film or an expandable container. The expandable container covers the cavity so that the internal parts of the layers are in contact with the container, and this may be achieved by inflating air into an expandable container, as in a balloon, so that the container contacts the internal layers of the cavity, or just by covering the internal layers of the cavity with a film.

Another aspect of the present invention relates to a mould for manufacturing a fibre-reinforced composite article having at least one cavity following a method as disclosed herein, the mould comprising: a lower mould plate; an upper mould plate for closing the lower mould plate and for defining a moulding cavity together with the lower mould plate; and at least one fluid injection port for injecting a fluid to at least one cavity defined between a first laminate or preform placed in the lower mould plate and a second laminate or preform placed in the upper mould plate.

In the mould as defined herein, the at least one fluid injection port may be comprised in the lower and/or upper mould plate.

The mould as disclosed herein may have a substantially polygonal shape.

Furthermore, the mould as disclosed herein may comprise at least one fluid injection port on at least two opposite faces thereof.

Moreover, the lower mould plate and/or the upper mould plate in the mould as disclosed herein may comprise a cooling circuit for the passage of a cooling fluid.

Another aspect of the present invention relates to a system for manufacturing a fibre-reinforced composite article having at least one cavity following a method as disclosed herein, the system comprising: a mould as disclosed herein; a pressure applying unit for applying a pressure to the upper and/or lower mould plate of the mould; a heating unit for heating the mould; and a fluid pressurizing unit fluidly connected to the at least one fluid injection port of the mould. The heating unit in the system herein disclosed may be in thermal contact with the upper mould plate and/or with the lower mould plate.

The system as defined herein may further comprise at least one pump fluidly connected to the cooling circuit of the mould.

Moreover, the pressure applying unit in the system herein may be a press.

Furthermore, the mould in the system as disclosed herein may have a substantially quadrangular shape and may comprise at least two diagonally opposed pressure applying units.

Each pressure unit in the system disclosed herein may comprise a tubular guide attached to the upper or lower mould plate and passing through the opposite mould plate; and a compressed spring abutting against a spring retention element and to said opposite mould plate.

The spring retention element in the system herein disclosed may be threaded to the tubular guide.

Moreover, the mould in the system as disclosed herein may be detachable from the rest of components of the system.

Another aspect of the present invention relates to a fibre-reinforced composite article having at least one cavity obtainable by the method for manufacturing a composite article as disclosed herein.

In the fibre-reinforced composite article as disclosed herein, the at least one cavity may be defined between a first and a second wall joined together at least in a peripheral joining region wherein the first and second walls may be substantially parallel one another.

Furthermore, in the fibre-reinforced composite article as disclosed herein, the at least one cavity may comprise at least one reinforcing element interconnecting the first and second walls.

Moreover, the fibre-reinforced composite article herein disclosed may comprise two cavities defined between the first and second walls joined together in the peripheral joining region and in an intermediate joining region between both cavities and in connection with the peripheral joining region.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

### Brief description of the Figures

The foregoing and other advantages and features will be more fully understood from the following detailed description of an embodiment with reference to the accompanying drawings, to be taken in an illustrative and non-limitative manner, in which:
FIG. 1 shows a flux diagram of the method according to the invention.
FIG. 2 schematically depicts an embodiment of the article as obtained by the method herein disclosed having one cavity, FIG. 2A depicting a section of the article and FIG. 2B depicting the article with two small inlet and outlet holes.
FIG. 3 schematically depicts a section of part of the article as obtained by the method herein disclosed wherein a reinforcing element interconnects the first and second walls of the article.
FIG. 4 schematically depicts an embodiment of the article as obtained by the method herein having two cavities and an intermediate joining region.
FIG. 5 schematically depicts a system as disclosed herein, FIG. 5A depicting the system when the mould is closed, wherein the higher mould plate is in contact with the lower mould plate in a closed position by pressure applying units and FIG. 5B depicting the lower part of the system comprising the lower mould plate.
FIG. 6 depicts an exploded view of the system as disclosed herein.

### Detailed Description of particular embodiments

In the present invention, the terms "wall", "layer" or "skin" when referred to an article obtained by the method herein disclosed, are of equivalent nature.

The laminates according to the present invention might be obtained by coating a fibre reinforcement with a resin by pre-impregnating the dry fibre with an adequate resin, cutting the laminates or preforms with the required dimensions, introducing the laminates in preform moulds to perform a pre-forming of the laminates to obtain a preform.

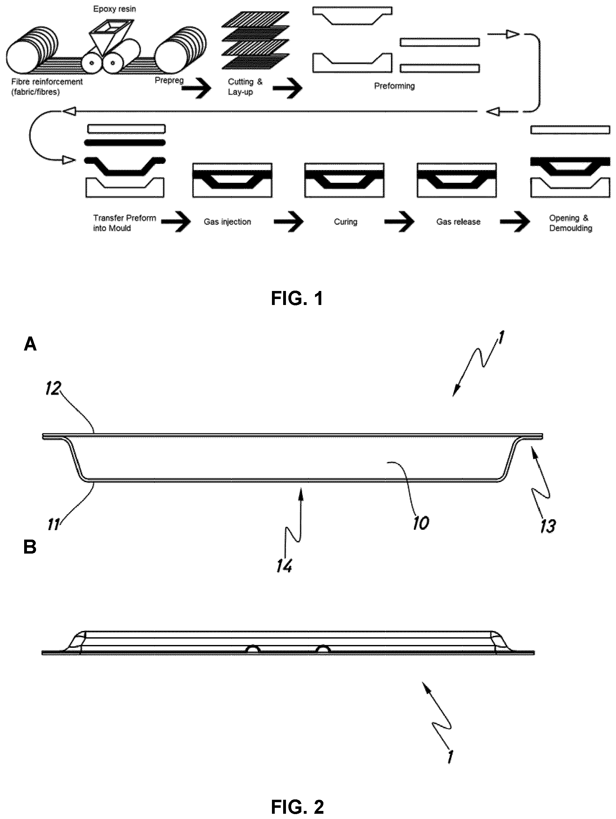

The process of obtaining a fibre reinforced article 1 is schematically drawn in FIG. 1, wherein a fibre reinforcement made of fibres is treated with a resin, preferably an epoxy resin, to form a prepreg. The prepreg is cut and layered and then is preformed in a mould 2. The preforms are transferred into the mould 2 disclosed in the present invention, the mould is closed and a fluid is injected into the cavity 10. The preforms in the mould are then cured, the fluid is released and the mould is opened and the article obtained 1 is demoulded. The article 1 can then be used in the application deemed appropriate.

The fibre-reinforced composite article 1 as disclosed herein has at least one cavity 10 and this cavity 10 is obtained without the need of a core that needs to be removed after curing. Moreover, the two laminates or preforms 11, 12 are joined in their joining regions 13 without the need of an adhesive -the walls are joined together when curing the first and second laminate or preform 11, 12.

It is essential for the present disclosure to place a fluid impermeable element covering the cavity defining region 14 that is formed between the two laminates or preforms 11, 12. The fluid impermeable element prevents the fluid injected in the cavity 10 to be diffused across/through the laminates or preforms 11,12. The fluid impermeable element covering the cavity defining region 14 is preferably placed on the laminates or preforms 11, 12. The fluid impermeable element is preferably deposited onto the laminates or preforms 11, 12 as a layer, covering the whole surface except the joining region 13 of the laminates or preforms 11, 12 that will be faced when manufacturing the article 1.

The fibre according to this disclosure may be preferably selected from the group of carbon fibre, glass fibre or natural fibre. The fibre is reinforced and impregnated by a resin, so that a fibre reinforced polymer laminate or preform 11, 12 is obtained.

Therefore, the article 1 obtained by the method as disclosed herein has the following structure, depicted schematically in FIG. 2A. The article has an upper skin or layer and a lower skin or layer both of them made of fibre-reinforced composite separated from each other by an air chamber, the air chamber defining a cavity 10. In the perimeter, both skins are in contact by a joining region 13, obtaining a closed component.

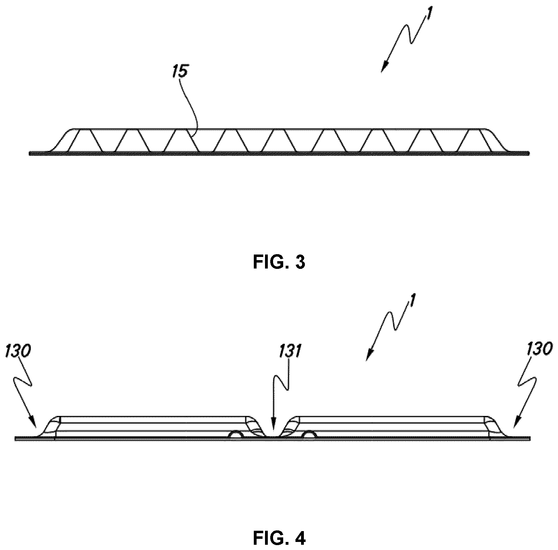

Another embodiment of the article according to the disclosure may have a central or intermediate joining region 131 so that two cavities 10 are defined, as shown in FIG. 4.

Alternatively, more than one joining regions 13 might be present in the article, so more than two cavities 10 may be defined. For instance, two centrally placed parallel intermediate joining regions 131 placed might be present in the article 1 and therefore three cavities 10 might be defined. Alternatively, two centrally placed perpendicular intermediate joining regions 131 might be present in the article 1 and therefore four cavities 10 might be defined.

In another embodiment, the central or intermediate joining region 131 does not go across the whole article 1, and therefore it does not form two separate cavities 10.

In general, the skilled person might obtain a variety of articles of different types and number of cavities depending on the positioning of the intermediately placed joining region(s).

Due to the injection system used, these components or articles may have a small inlet and outlet holes for a gas or fluid, as shown in e.g. FIG. 2B and FIG. 4, which once the part is cured, may be covered with structural resin to obtain completely hermetic parts.

Moreover, the fibre-reinforced composite article 1 as disclosed herein may contain a reinforcing element 15 interconnecting the first and second walls of the article, as shown in FIG. 3. The reinforcing element 15 may be corrugated in a preferred embodiment.

The components are cured preferably in a single curing cycle and no adhesive at all binding the different parts of the components are present, as required by the railway regulations.

The article 1 as disclosed herein and obtained by the method according to the present disclosure has the advantages of other state-of-the-art articles in that the thickness and inertia are increased, while the weight, and the costs associated with the manufacture of such articles are decreased. In particular, the cycle time is significantly reduced.

The article 1 as defined herein has the functionality of guaranteeing the tightness. Moreover, in the railway sector, the article allows access to the equipment installed under the passengers compartment of the train cabin, facilitating its installation, assembly and maintenance, houses all closing and opening systems, ensures sufficient structure to support the different elements/equipment that will be attached to it, favours the soundproofing of the cabin, protects the bottom of the train from possible impacts and complies with the technical requirements according to railway regulations.

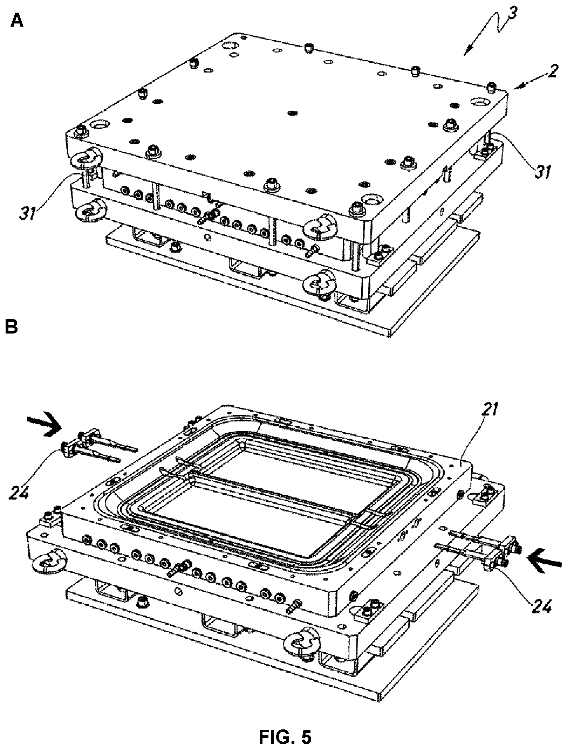

The system 3 as disclosed herein is depicted in FIG. 5. The system 3 comprises the mould 2 configured to obtain the article 1 as disclosed herein. For instance, FIG. 5B shows a system comprising the lower part of the mould 21 that produces an article having two cavities because a central joining region is defined therein. FIG. 5B also discloses two fluid injection ports 24 in the lower mould plate 21 for injecting a fluid into the two cavities 10 defined between the first laminate or preform 11 placed in the lower mould plate 21 and a second laminate or preform 12 placed in the upper mould plate 22.

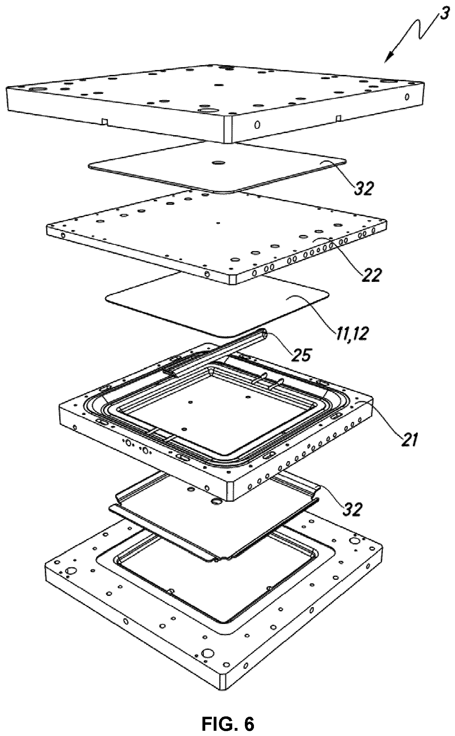

An embodiment showing different parts of the system 3 as disclosed herein are also depicted in FIG. 6, in an exploded view. In line with FIG. 5A and FIG. 5B, the system depicted shows a mould 2 configured to produce an article 1 having two cavities 10 separated by a central joining region 131 and two fluid injection ports 24 to inject the fluid into each of the two cavities defined. The central joining region can also be obtained by a conveniently placed insert 25 that, when the two laminates or preforms 11, 12 are closed in the mould, the lower laminate or preform 11 achieves the desired geometry producing an article 1 having two cavities 10.

In order to mass-produce the articles 1 according to the disclosure, the system 3 as disclosed may be designed so that the mould 2 is detachable, so that the forming of the laminates or preforms 11, 12 is performed independently in the lower and upper mould plate 21, 22 and the set of non-cured article 1 plus the mould plates 21, 22 is then introduced in the system 3 for the curing step by the heating unit 32. While the curing step is taking place, another mould 2 comprising the mould plates 21, 22 can be available and forming a second set of laminates or preforms 11, 12. This configuration allows decreasing the production cycle time of articles, because the system 3 does not need to cool down before and after the forming of articles 1 but may be constantly heated.

## Claims

1. Method for manufacturing a fibre-reinforced composite article (1) having at least one cavity (10), the method comprising the steps of:
- providing two laminates or preforms (11, 12) obtained by coating a fibre reinforcement with a resin, said at least two laminates or preforms (11, 12) having at least one joining region (13) and at least one cavity defining region (14),
- placing the first laminate or preform (11) in a lower mould plate (21) of a mould (2) according to any one of claims 7 to 11,
- placing the second laminate or preform (12) in an upper mould plate (22) of a mould (2) according to any one of claims 7 to 11,
- placing a fluid impermeable element covering the at least one cavity defining region (14) of the two laminates or preforms (11, 12),
- closing the lower mould plate (21) with the upper mould plate (22) so that the second laminate or preform (12) is placed over the first laminate or preform (11), so that at least one cavity (10) is created between opposite cavity defining regions of the two laminates or preforms (11, 12) and so that the joining regions (13) of the first and second laminates (11, 12) are in contact and overlapping one another,
- injecting a fluid to the at least one cavity (10) defined between the first and the second laminate or preform (11, 12) via at least one fluid injection port (24) of the mould (2),
- curing the first and second laminate or preform (11, 12) to form a fibre reinforced composite article (1) having at least one cavity (10) between a first and a second wall joined together at least in a peripheral joining region (130),
- removing the fluid from the at least one cavity (10) of the fibre-reinforced composite article (1),
- opening the mould (2), and
- demoulding the fibre-reinforced composite article (1).

2. Method, according to claim 1, wherein the step of curing the first and second laminate or preform (11, 12) comprises the steps of:
- applying a pressure to the lower mould plate (21) and/or to the upper mould plate (22); and
- heating the lower mould plate (21) and/or the upper mould plate (22).

3. Method, according to claim 1 or 2, wherein the first and second laminates or preforms (11, 12) have two cavity defining regions (14), one peripheral joining region (130) and one intermediate joining region (131) between the two cavity defining regions (14) and in connection with the peripheral joining region (130), so that when the lower mould plate (21) is closed with the upper mould plate (22), two cavities (10) are created between opposite cavity defining regions (14) and the peripheral and intermediate joining regions (130, 131) of the first and second laminates or preforms (11, 12) are in contact and overlapping one another, so that curing the first and second laminates or preforms (11, 12) forms a fibre reinforced composite article (1) having two cavities (10) between a first and a second wall joined together in a peripheral joining region (130) and in an intermediate joining region (131) between both cavities.

4. Method, according to any one of claims 1 to 3, further comprising the step of placing at least one reinforcing element (15) on the first preform or laminate (11), said reinforcing element (15) being shaped so as to be in contact with the second preform or laminate (12) when the mould is closed.

5. Method, according to claim 4, wherein the step of curing the first and second preform or laminate (11, 12) further comprises the step of curing the at least one reinforcing element (15) so that it joins to the first and second preforms or laminates (11, 12).

6. Method, according to any one of the preceding claims, wherein the fluid impermeable element is composed of a polymer comprising a resin of polyester, vinyl-ester, epoxide and/or combinations thereof and/or wherein the fluid impermeable element is a film or an expandable container.

7. Mould (2) for manufacturing a fibre-reinforced composite article (1) having at least one cavity (10) following a method according to any one of claims 1 to 6, the mould comprising:
- a lower mould plate (21);
- an upper mould plate (22) for closing the lower mould plate (21) and for defining a moulding cavity (10) together with the lower mould plate (21);
- at least one fluid injection port (24) for injecting a fluid to at least one cavity (10) defined between a first laminate or preform (11) placed in the lower mould plate (21) and a second laminate or preform (12) placed in the upper mould plate (22).

8. Mould (2), according to claim 7, wherein the at least one fluid injection port (24) is comprised in the lower and/or upper mould plate (21, 22).

9. Mould (2), according to claims 7 or 8, wherein the mould (2) has a substantially polygonal shape.

10. Mould (2), according to any one of claims 7 to 9, wherein the lower mould plate (21) and/or the upper mould plate (22) comprises a cooling circuit for the passage of a cooling fluid.

11. System (3) for manufacturing a fibre-reinforced composite article (1) having at least one cavity (10) following a method according to any one of claims 1 to 6, the system comprising:
- a mould (2) according to any one of claims 7 to 11;
- a pressure applying unit (31) for applying a pressure to the upper and/or lower mould plate (21, 22) of the mould (2);
- a heating unit (32) for heating the mould (2); and
- a fluid pressurizing unit fluidly connected to the at least one fluid injection port (24) of the mould.

12. System (3), according to claim 11, wherein the heating unit (32) is in thermal contact with the upper mould plate and/or with the lower mould plate (21, 22).

13. System (3), according to claim 12, wherein each pressure applying unit (31) comprises:
- a tubular guide attached to the upper or lower mould plate (21, 22) and passing through the opposite mould plate; and
- a compressed spring abutting against a spring retention element and to said opposite mould plate.

14. System (3), according to any one of claims 11 to 13, wherein the mould (2) is detachable from the rest of components of the system (3).

15. Fibre-reinforced composite article (1) having at least one cavity (10) obtainable by the method for manufacturing a composite article according to any one of claims 1 to 6.
